# EUROPEAN PATENT SPECIFICATION

(11) **EP 4 056 837 B1**
(45) Date of publication and mention of the grant of the patent: **12.06.2024**
(21) Application number: 21020132.3
(22) Date of filing: 08.03.2021
(51) Int. Cl.: F03D 1/06, F03D 80/30

(54) **ROTOR BLADE COMPRISING AN ELECTRICAL CONNECTION FOR A LIGHTNING PROTECTION SYSTEM**
ROTORBLATT MIT ELEKTRISCHER VERBINDUNG FÜR EIN BLITZSCHUTZSYSTEM
PALE AVEC RACCORDEMENT ÉLECTRIQUE POUR UN SYSTÈME DE PROTECTION CONTRE LA FOUDRE

(43) Date of publication of application: 14.09.2022
(73) Proprietor: Siemens Gamesa Renewable Energy Service GmbH, 20097 Hamburg (DE)
(72) Inventor: Mathis, Lukas, 24119 Kronshagen (DE); Zeller, Lenz Simon, 24242 Felde (DE)
(74) Representative: Groth, Wieland

(56) References cited:
- EP-A1- 2 930 355
- CN-A- 110 219 784

## Description

The invention relates to a rotor blade according to the preamble to claim 1 and to a method for the production of a rotor blade with a lightning conductor system with a lightning conductor cable.

Rotor blades with caps containing carbon fibres are known in the prior art. Lightning strikes during the operation of a wind turbine usually occur in the rotor blades, preferably in the outermost tips of the rotor blades. Therefore according to the prior art lightning receptors are arranged on the rotor blade tip and in the tip section of the rotor blade tip. Lightning receptors are metal bolts which are aligned with the outer skin of the rotor blade and are connected internally by means of an insulated lightning conductor cable to the rotor blade hub and from there are earthed by means of a further lightning conductor cable.

When caps containing carbon fibres are used it has been shown that lightning strikes can also take place in the caps containing carbon fibres, since the carbon fibres are likewise electrically conductive. It is therefore known in the prior art to use the electrical line of the caps and to allow a current flow through the caps and to earth the caps themselves and thus to draw off the current from the caps. In this case it is a disadvantage that the caps could be damaged by the current flow.

CN 110219784 A discloses a rotor blade with a lightning protection system with a connecting plate in which a metal mesh is fixed and through which, a bolt with a bolthead is arranged while the bolthead operates as a lightning receptor and is arranged outside the rotor blade shell.

EP 2 930 355 A1 discloses a rotor blade with a lightning protection system with a connecting plate which connects a mesh with a lightning conducting cable while the connecting plate is melted with the mesh.

A further possibility of the lightning protection is to insulate the caps at least in the region of the rotor blade tip. This usually takes place by introducing an electrically conductive layer which completely shields the cap between the cap and the rotor blade outer skin. Here the problem arises of connecting the electrically conductive shielding layer and the lightning conductor system.

It is therefore an object of the present invention to provide an above-mentioned rotor blade which connects a protective shield of a cap containing carbon fibres to a lightning conductor system.

It is also an object of the present invention to provide a method for the production of a rotor blade by which the shielding of a cap containing carbon fibres can be produced advantageously by a lightning conductor system.

With regard to the rotor blade, the object is achieved by a rotor blade having the features of claim 1.

The rotor blade has at least one cap containing carbon fibres. The rotor blade can be assembled from two half-shells and can also be formed from one shell. But also other compositions are possible. The rotor blade has one or two or a higher number of caps, wherein pairs of caps lie opposite one another in the rotor blade and are preferably connected to one another in each case by a web.

The at least one cap containing carbon fibres is shielded on the rotor blade outer side by at least one electrically conductive mesh layer against lightning strikes. The at least one mesh layer can cover the entire cap on the rotor blade outer side or can also cover the cap only in sections. In particular the at least one mesh layer covers a tip section of the cap. The rotor blade has a lightning conductor system with a lightning conductor cable. The lightning conductor system can comprise a metal rotor blade tip as well as lightning receptors, which are preferably recessed into the rotor blade outer skin, in particular in the tip end section of the rotor blade, and have a metal surface which is aligned with the rotor blade outer skin. A preferably highly insulated lightning conductor cable is arranged in an interior of the rotor blade and electrically conductively connects the metal rotor blade tip, if present, and the lightning receptor to the lightning conductor cable. The lightning conductor cable is guided through the entire interior of the rotor blade as far as the rotor blade hub and connected there to a grounding cable which conducts the current of a lightning strike away into the earth.

According to the invention an electrically conductive connecting device is provided between the at least one mesh layer and the lightning conductor cable and comprises an electrically conductive disc into which the at least one mesh layer is conductively introduced and which comprises an electrically conductive connecting means which is guided through the disc and is electrically conductively connected to the lightning conductor cable.

Advantageously, in a simple manner the connecting device according to the invention facilitates an electrically conductive connection between the at least one mesh layer, which is provided in order to protect the caps containing carbon fibres, and a lightning conductor system preferably already arranged in a rotor blade in a conventional manner.

In a cross-section the at least one mesh layer advantageously projects laterally beyond the cap, where the at least one mesh layer is electrically conductively connected to the connecting device. For effective protection of the cap containing carbon fibres in one, preferably in each cross-section perpendicular to the longitudinal direction of the rotor blade the at least one electrically conductive mesh layer is designed to be broader than the cap itself, so that the mesh layer projects beyond the cap laterally both on the rotor blade leading edge side and also on the rotor blade trailing edge side. The connecting device is advantageously provided in this region of the at least one mesh layer projecting over the cap, and the at least one mesh layer is connected by means of the connecting device to the lightning conductor cable. In this way the mechanical stability of the cap remains unaffected, and nevertheless an electrically conductive connection is produced between the at least one mesh layer and the lightning conductor cable.

A connector block, into which a section of the connecting means is introduced, preferably screwed, and which is electrically conductively connected to the lightning conductor cable, is advantageously arranged on the rotor blade inner side of the electrically conductive disc. Connector blocks are known in the prior art. Here the known connector block, which is used per se for screwing in lightning receptors, is used for fastening the connecting means of the connecting device according to the invention.

Two opposing caps containing carbon fibres are preferably provided, which have opposing connecting devices each having a connecting means which is introduced in the same connector block with a section in each case. This is a form of the lightning conductor system which can be produced cost-effectively for two caps.

The connecting means is designed as a bolt having a head. The bolt can have a thread on the opposite end of the bolt. The thread then forms the section which is introduced, preferably screwed, into the connector block. This embodiment is also advantageously based on known connector blocks and provides further developments thereof.

According to the invention, the connecting means is designed as a bolt having a head which abuts the electrically conductive disc and forms an electrically conductive contact therewith.

Particularly preferably the at least one mesh layer is designed with multiple layers in the region of the connecting device. Particularly high currents occur, in particular on transition lines between the at least one mesh layer and the connecting device, since after a lightning strike the current initially flows through the entire mesh layer and is then concentrated in the direction of the connecting device, in particular on the connecting means, onto a small region, so that there the at least one mesh layer has a higher current flowing through it and is protected against excessive heating by reinforcement of the at least one mesh layer by forming it with multiple layers, preferably two, three or more layers. The at least one mesh layer can be formed in one piece and/or in one layer over the cap or at least one section of the cap. The at least one mesh layer on the connecting device is preferably multi-layered, and it is also conceivable that the at least one mesh layer in the connecting device is formed separately from the at least one mesh layer along the cap, and in the connecting device the at least one mesh layer rests, preferably directly, completely around the connecting device on the at least one mesh layer of the cap rests and thus an electrically conductive connection is formed.

In this respect this design is advantageous, because the connecting device with locally delimited mesh layers makes it possible to form the connecting device as a separate component which can be integrated between the cap and the rotor blade shell during the assembly of the rotor blade.

Advantageously, teeth which press into the disc are arranged on the rotor blade inner side of the bolt. As a result a particularly good electrical line is produced between the connecting means and the disc.

The disc is advantageously soldered or welded into the at least one mesh layer. For this purpose the at least one mesh layer can be surrounded by the electrically conductive disc and can be penetrated preferably equatorially by the mesh layer. As a result a particularly good conductive contact is produced.

A hole through which the connecting means can be introduced is preferably guided centrally through the disc and the at least one mesh layer. In this way a simple assembly is advantageously possible.

The disc is advantageously introduced between two halves of an electrically insulating shim, of which the boundary regions, if the two halves are joined to one another, in each cross-section form an S-shaped gap in which the at least one mesh layer is arranged and which in each cross-section likewise takes the form of an S-shaped twist.

Due to the S-shaped twisting of the at least one mesh layer the contact point between mesh layer and disc is less sensitive to tensile loads.

A channel is advantageously introduced into the rotor blade shell on the rotor blade outer side of the connecting means and is closed with laminate.

On the rotor blade inner side the connecting device is preferably laminated onto a rotor blade inner side.

With regard to the method, the object is achieved by a method with the features of claim 13.

The method according to the invention is suitable for the production of one of the above-mentioned rotor blades, and conversely each of the above-mentioned rotor blades can be produced by one of the following methods.

The method is suitable for the production of a rotor blade with a lightning conductor system with a lightning conductor cable, wherein at least one electrically conductive mesh layer, which in a cross-section extends laterally alongside the cap, is arranged between at least one cap containing carbon fibres and a rotor blade shell, and an electrically conductive disc is introduced conductively into the at least one mesh layer and an electrically conductive connecting means is guided through the disc and is electrically conductively connected to the lightning conductor cable. Caps containing carbon fibres are usually protected against lightning strikes by electrically conductive mesh layers which are arranged between the cap and the rotor blade shell. In this case the at least one mesh layer can also be provided just below the rotor blade outer skin, for example if the caps are already integrated into the rotor blade shell as part of the rotor blade outer shell.

The at least one electrically conductive mesh layer extends in a cross-section laterally alongside the cap, and according to the invention an electrically conductive disc is introduced conductively in a connection region of the at least one mesh layer arranged laterally alongside the cap, and an electrically conductive connecting means is guided through the disc and is electrically conductively connected to the lightning conductor cable.

Thus the method of production according to the invention makes it possible, also in the case of conventional rotor blades, for the mesh layers inserted into the rotor blade shell to be connected electrically conductively in a reliable manner to the preferably already existing lightning conductor cable.

For this purpose the conductive disc is advantageously cast around the at least one electrically conductive mesh layer, so that at the same time the at least one electrically conductive mesh layer is integrated into the disc and runs through the disc preferably equatorially.

The disc is preferably introduced between two halves of an electrically insulating shim, of which the boundary regions, after the two halves have been joined to one another, in each section form an S-shaped gap in which is arranged a section of the at least one mesh layer which in each cross-section takes on the S-shaped form of the gap. Due to the S-shaped twisting of the at least one mesh layer this layer is less sensitive to lateral loads, and breakages of the at least one mesh layer directly at the transition between mesh layer and disc occur more rarely.

Particularly preferably a channel is drilled from the outside through the rotor blade shell to a hole in the disc, and the connecting means is guided from outside through the channel and the opening and is electrically conductively connected to the lightning conductor cable. As already described above, the connecting means is designed as a bolt. The bolt can be screwed into a connector block which in turn is connected to a lightning conductor cable.

Advantageously, the channel is closed again after the assembly in order not to create any aerodynamic resistance.

On the rotor blade inner side the connecting device can be overlaminated in order to protect it.

The invention is described with reference to three exemplary embodiments in eight drawings.

In the drawings:
Fig. 1 shows a perspective plan view of a rotor blade tip according to the invention.
Fig. 2 shows a section along the line II-II in Figure 1,
Fig. 3 shows a connecting device according to the invention between the mesh layer and the connector block,
Fig. 4 shows a disc according to the invention,
Figs. 5a, 5b, 5c show three different embodiments of a surface of a bolt inside the rotor blade,
Fig. 6 shows an exploded view of the connecting device according to the invention with three mesh layers.

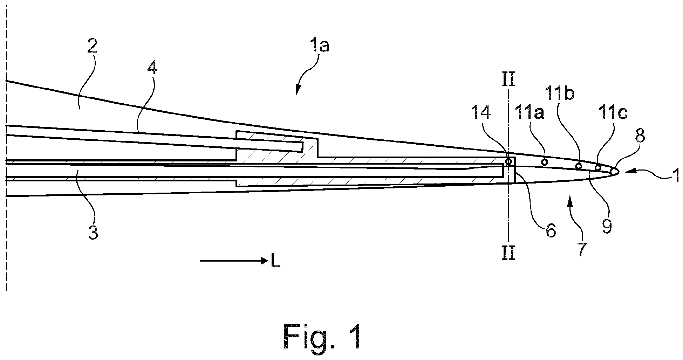

A tip section 1a of a rotor blade 1 according to the invention is illustrated in Figure 1. The rotor blade 1 is composed of two rotor blade half-shells. However, other designs, for example with a shell, are also conceivable. Each of the rotor blade half-shells has two caps 3, 4 on the inner wall of a rotor blade half-shell 2 inside a rotor blade. A main cap 3 and a secondary cap 4 are illustrated in Figure 1. The main cap 3 extends along a leading edge of the rotor blade 1, and the secondary cap 4 extends nearer to a trailing edge of the rotor blade 1.

Both caps 3, 4 are constructed from at least one, preferably a plurality of woven and laid fabric layers, possibly also pultruded layers. At least one of the layers contains carbon fibres. The layers of the belt 3, 4 are electrically conductive. The consequence of this is that a lightning strike is more likely to take place in the caps containing carbon fibres, in particular in the tip section, than for example in glass fibre layers. It has been shown that lightning strikes take place almost exclusively in the tip section 1a of the rotor blade 1, regardless of whether the rotor blade 1 has exclusively fabric layers containing glass fibres or also has fabric layers containing carbon fibres. If fabric layers containing carbon fibres are present, the lightning strike preferably takes place into the carbon fibres in the tip section 1a. In order to protect the cap 3, 4, therefore, the cap 3, 4 is shielded on the outside of the rotor blade by an electrically conductive mesh layer 6. The mesh layer 6 is a type of fine wire mesh which, in a cross-section perpendicular to a longitudinal direction L of the rotor blade 1, completely covers the cap 3, 4 on the outside of the rotor blade in the tip section 1a and projects laterally on both long sides over cap 3, 4. In Figure 1 this applies both to the tip section 1a of the main cap 3 and also to the tip section 1a of the secondary cap 4. In a tip end section 7, which constitutes an end of the tip section 1a, there is no main cap 3 or secondary cap 4 containing carbon fibres.

A tip of the rotor blade 1 is formed as a metal tip 8 in Figure 1. A lightning conductor cable 9 leads off from this. The lightning conductor cable 9 is guided into a rotor blade hub. The lightning conductor cable 9 adhered on the rotor blade half-shell inner wall 2 advantageously extends along the main cap 3. The lightning conductor cable 9 is highly insulated. In Figure 1 three lightning receptors 11a, 11b, 11c are provided alongside the metal tip 8 in the tip end section 7. In this case these lightning receptors are metal bolts which have a metal surface directly aligned with a rotor blade outer skin and are guided to the lightning conductor cable 9 and are electrically conductively connected thereto. A current of a lightning strike into the tip end section 7 into one of the lightning receptors 11a, 11b, 11c is conducted by the lightning conductor cable 9 into the rotor blade hub and from there further into the ground.

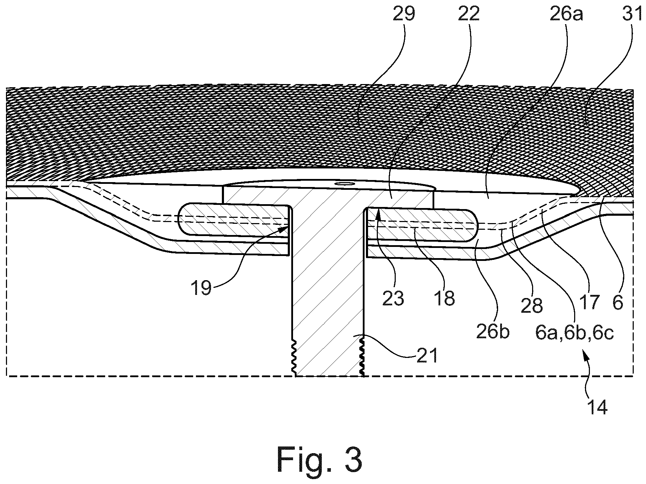

In Figure 1 a connecting device 14 according to the invention is arranged between the mesh layer 6 and the lightning conductor cable 9 at the end of the electrically conductive mesh layer 6 near the tip. Further appropriately constructed connecting devices 14 can also be provided along the mesh layer 6. In particular, a further connecting device 14 can be provided at the end of the mesh layer 6 near the rotor blade hub. The construction of the connecting device 14 is shown in detail in Figure 3.

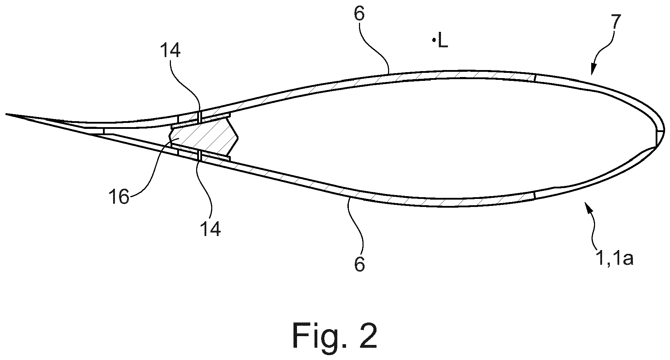

Figure 2 shows a section along the line II-II in Figure 1. The rotor blade 1 has two rotor blade half-shells. Each of the rotor blade half-shells has a main cap 3 and a secondary cap 4 which lie opposite one another and are connected to one another in each case by means of a web. Figure 2 shows the tip end section 7 in which no more cap 3, 4 is provided in Figure 1. However, the mesh layer 6 extends into the cross-section and there, arranged on the trailing edge, there is a connector block 16 which is electrically conductively connected to the electrically conductive mesh layer 6 by means of the connecting device 14 according to the invention according to Figure 3. The lightning conductor cable 9 extending from the metal tip 8 along the tip end section 7 is electrically conductively introduced into the connector block 16, and the electrically conductive lightning conductor cable 9 extends further in the direction of the rotor blade hub, so that the electrically conductive mesh layer 6 is also electrically conductively connected by means of the connecting device 14 to the lightning conductor cable 9.

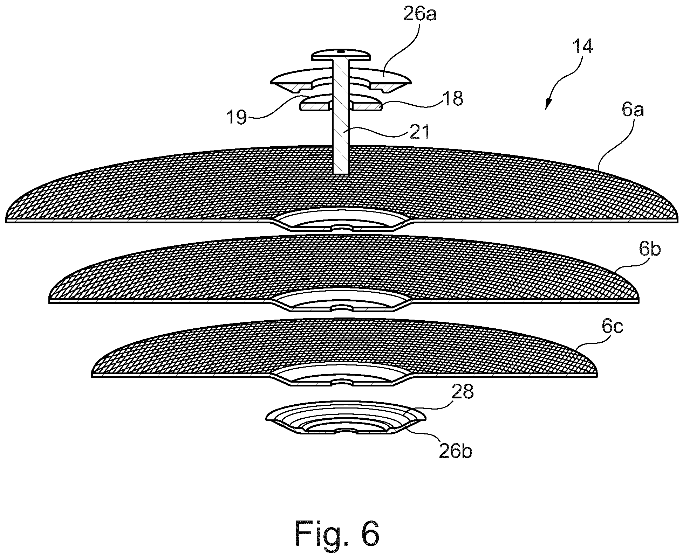

Figure 3 shows a construction of the connecting device 14 according to the invention. An exploded view of Figure 3 is illustrated in Figure 6. The connecting device 14 comprises three mesh layer discs 6a, 6b, 6c, wherein each mesh layer disc 6a, 6b, 6c has a circular shape in plan view. The mesh layer disc 6a on the rotor blade outer side has a diameter of 400 mm, the central mesh layer disc 6b has a diameter of 350 mm and the mesh layer disc 6c on the rotor blade inner side has a diameter of 300 mm. The three mesh layer discs 6a, 6b, 6c are placed one upon the other and thus are designed to be electrically conductively connected to one another. Each mesh layer disc 6a, 6b, 6c is made from a conductive material such as aluminium or copper. Thus these are in each case a copper mesh or an aluminium mesh, wherein the individual fibres are not insulated.

The connecting device 14 illustrated in Figure 6 is provided as a separate component. The three mesh layer discs 6a, 6b, 6c of the connecting device 14 form a connection region 17 with the mesh layer 6 of the rotor blade, wherein for example a hole is cut into the mesh layer 6 of the rotor blade 1 and the connecting device 14 according to Figure 6 is placed onto the hole fitted and the three mesh layers 6a, 6b, 6c with the mesh layer 6 of the rotor blade lie on one another, forming an electrical contact in the connection region 17.

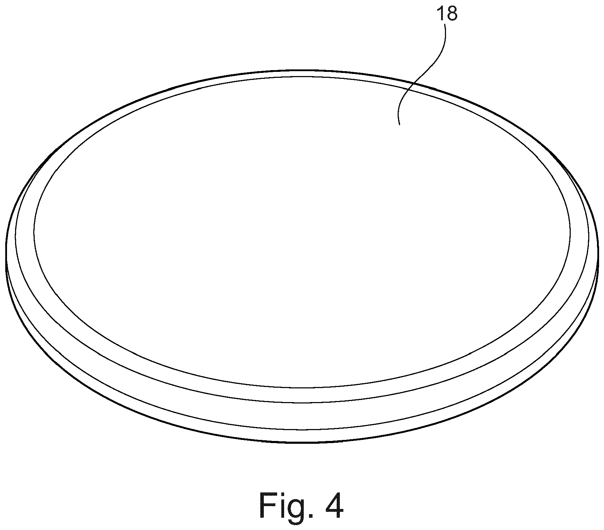

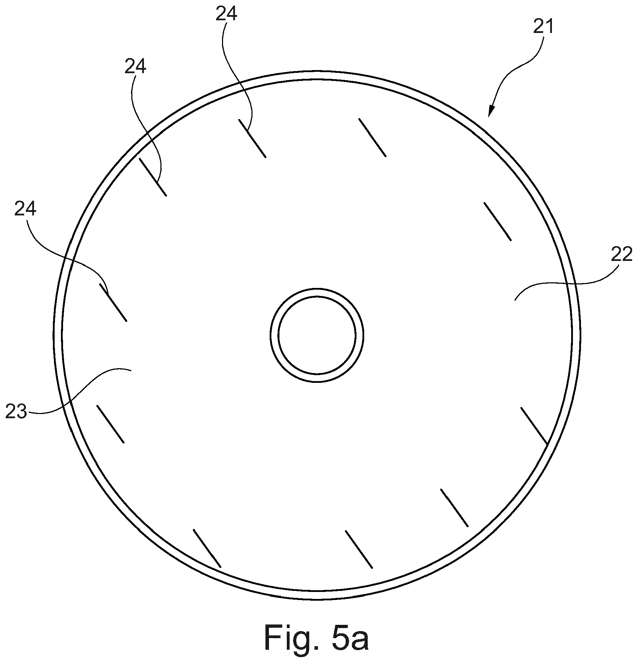

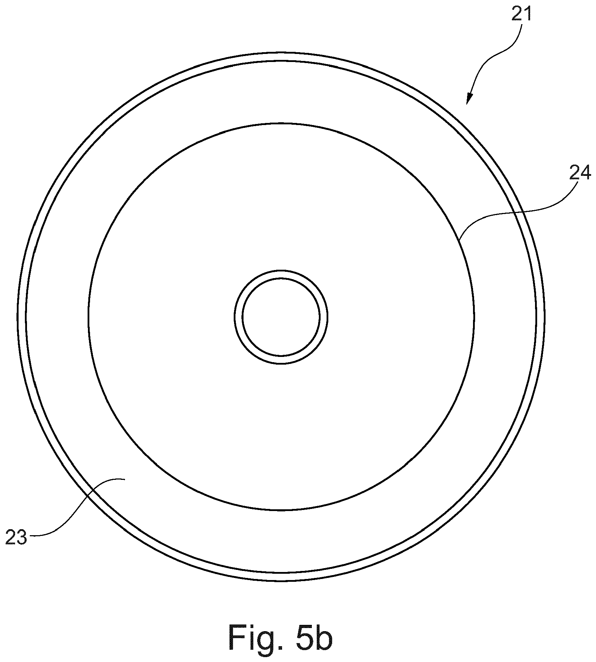

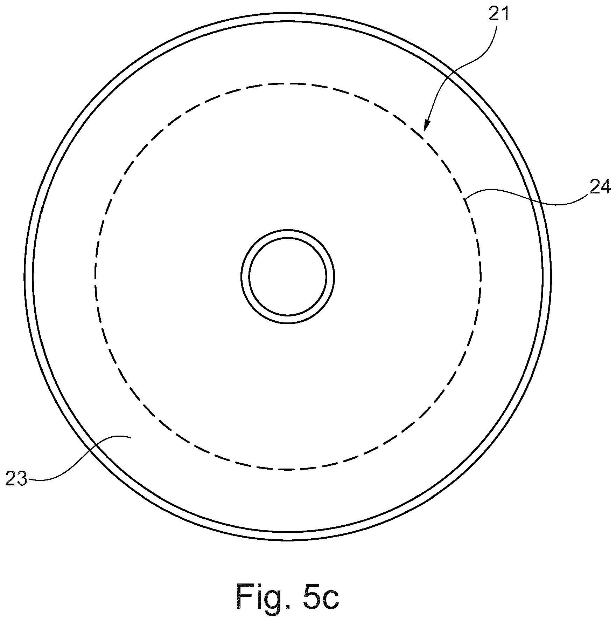

The three mesh layers 6a, 6b, 6c are electrically conductively connected to one another centrally by means of an electrically conductive disc 18 which is illustrated in Figure 4. Preferably the mesh layers 6a, 6b, 6c are laid one above the other and the central region is introduced into a production mould, and then an electrically conductive material is poured into the mould, so that the electrically conductive disc 18 conductively connects the three mesh layer discs 6a, 6b, 6c to one another centrally. The arrangement is shown in Figure 3, in the which the three mesh layer discs 6a, 6b, 6c are guided through the conductive disc 18 for instance along the equator of the conductive disc 18. A hole is drilled through the conductive disc 18 and the three mesh layer discs 6a, 6b, 6c cast around thereby, and according to Figure 3 an electrically conductive bolt 21 is inserted through the hole. The electrically conductive bolt 21 has a head 22, the surface 23 of which on the rotor blade inner side of the electrically conductive contact with the electrically conductive disc 18 according to Figure 5a, 5b or 5c can have teeth 24.

In Figure 5a these teeth 24 are oriented parallel to one another and are arranged along the outer circumference of the surface 23 of the bolt 21 on the rotor blade inner side.

In Figure 5b the tooth 24 is formed by means of a radially extending protrusion which is continuous, whereas in Figure 5c the radially extending protrusion has individual teeth 24 which are spaced apart from one another. The bolt 21 has on its end on the rotor blade inner side a thread by means of which the bolt 21 can be screwed into the connector block 16 according to Figure 2.

The electrically conductive disc 18 is surrounded on the rotor blade inner side and the rotor blade outer side by two halves 26a, 26b of a shim 26, the cross-section of which is illustrated in Figure 6, but also in Figure 3. The shim 26 has a greater diameter than the electrically conductive disc 18. Both are preferably circular. In particular the two halves 26a, 26b of the shim 26, when they are laid onto both sides of the conductive disc 18, form an S-shaped gap 28 in each cross-section through which the three mesh layer discs 6a, 6b, 6c are guided in an S-shape. The S-shaped twisting of the mesh layers 6a, 6b, 6c in the region of the connecting device 14 gives the mesh layer discs 6a, 6b, 6c a certain elasticity relative to the pulling forces which, in particular during operation of the wind turbine, are formed by bending of the rotor blade 1 a in flap or impact direction and act laterally on the mesh layer discs 6a, 6b, 6c.

The connecting device 14 illustrated in Figure 3 is initially positioned on the inner wall of the rotor blade 1 at a predetermined location where it lies behind the mesh layer 6 of the rotor blade. The three individual mesh layer discs 6a, 6b, 6c of the connecting device 14 conductively overlay the mesh layer 6 of the rotor blade 1 in the connection region 17.

Then a channel 29 is drilled through a rotor blade shell 31 on the rotor blade outer side. The channel 29 precisely meets a hole 19 in the conductive disc 18. From the outside the bolt 21 with an external thread is inserted through the electrically conductive disc 18 and is firmly screwed into the connector block 16. In this case an electrically conductive connection forms between the head 22 of the bolt 21 and the conductive disc 18. The bolt 21 is preferably made from stainless steel and has a head with a diameter of 35 mm or more, although other dimensions are also conceivable. The shim 26 is overlaminated internally, so that the shim 26 with the conductive disc 18 accommodated therein is firmly laminated onto the inner side of the rotor blade shell 31. Then the channel 29 introduced from the outside can be closed again with laminate.

The conductive disc 18 is preferably soldered around the three mesh layers 6a, 6b, 6c in an exothermic welding method or soldering method using a material containing aluminium, in particular an aluminium alloy. The conductive disc 18 preferably has a diameter of 50 mm and a thickness of 5 mm; however, other dimensions are also conceivable. The disc has rounded corners in order to reduce electromagnetic fields during the lightning strike and in order to simplify the soldering method.

### List of references

- 1a: tip section
- 1: rotor blade
- 2: rotor blade shell inner wall
- 3: main cap
- 4: secondary cap

- 6: mesh layer
- 6a: mesh layer disc
- 6b: mesh layer disc
- 6c: mesh layer disc
- 7: tip end section
- 8: metal tip
- 9: lightning conductor cable

- 11a: lightning receptor
- 11b: lightning receptor
- 11c: lightning receptor

- 14: connecting device

- 16: connector block
- 17: connection region
- 18: electrically conductive element
- 19: hole

- 21: electrically conductive bolt
- 22: head
- 23: surface
- 24: teeth

- 26: shim
- 26a: shim half
- 26b: shim half

- 28: gap
- 29: channel

- 31: rotor blade shell

- L: longitudinal direction

## Claims

1. Rotor blade with
at least one cap (3, 4) comprising carbon fibres and
with at least one electrically conductive mesh layer (6) which is arranged on the rotor blade outer side of the carbon fibres, and
with a lightning conductor system having a lightning conductor cable (9),
and an electrically conductive connecting device (14) provided between the mesh layer (6) and the lightning conductor cable (9) and which comprises an electrically conductive disc (18) into which a connecting region (17) of the mesh layer (6) is conductively introduced and which comprises an electrically conductive connecting means (21) which is guided through the disc (18) and is electrically conductively connected to the lightning conductor cable (9), **characterized in that** the connecting means is designed as a bolt (21) having a head (22) which abuts the disc (18) and forms an electrically conductive contact therewith.

2. Rotor blade according to claim 1, **characterised in that** in a cross-section the mesh layer (6) projects laterally over the cap (3, 4) and the connection region (17) of the mesh layer (6) is arranged laterally alongside the cap (3, 4).

3. Rotor blade according to claim 1 or 2, **characterised in that** a connector block (16), into which a section of the connecting means (21) is introduced and which is electrically conductively connected to the lightning conductor cable (9), is advantageously arranged on the rotor blade inner side of the disc (18).

4. Rotor blade according to claim 1, 2 or 3, **characterised in that** two opposing caps (3) containing carbon fibres are provided, which have opposing connecting devices (14) with in each case a connecting means (21) which are introduced into the same connector block (16).

5. Rotor blade according to one of the preceding claims, **characterised in that** the mesh layer (6) completely covers a tip section of the cap (3, 4) on the rotor blade outer side.

6. Rotor blade according to one of the preceding claims, **characterised in that** the mesh layer (6) is designed with multiple layers in the connection region (17).

7. Rotor blade according to claim 6, **characterised in that** the mesh layers (6) running out of the disc (18) rest on mesh layers (6) along the cap (3, 4).

8. Rotor blade according to claim 7, **characterised in that** teeth (24) which press into the disc (18) are arranged on a rotor blade inner side of the head (22).

9. Rotor blade according to one of the preceding claims, **characterised in that** the disc (18) is soldered or welded into the connection region (17).

10. Rotor blade according to one of the preceding claims, **characterised in that** the disc (18) is introduced between two halves (26a, 26b) of an electrically insulating shim (26), of which the boundary regions, if the two halves (26a, 26b) are joined to one another, in each cross-section form an S-shaped gap (28) in which the at least one mesh layer (6) is arranged and which in each cross-section likewise takes the form of an S-shape.

11. Rotor blade according to one of the preceding claims, **characterised in that** on the rotor blade outer side of the connecting means (21) a channel (29) which is closed with laminate is introduced into a rotor blade shell (31).

12. Rotor blade according to one of the preceding claims, **characterised in that** on the rotor blade inner side the connecting device (14) is laminated onto a rotor blade shell inner side.

13. Method for the production of a rotor blade with a lightning conductor system with a lightning conductor cable (9), wherein at least one electrically conductive mesh layer (6), which in a cross-section extends laterally alongside an at least one cap (3, 4), is arranged between the at least one cap (3, 4) containing carbon fibres and a rotor blade shell (31), and an electrically conductive disc (18) is introduced conductively into the at least one mesh layer (6) in a connection region (17) arranged laterally alongside the cap (3, 4), and an electrically conductive connecting means (21) is guided through the disc (18) and is electrically conductively connected to the lightning conductor cable (9), **characterized in that** the connecting means is designed as a bolt (21) having a head (22) abutting the disc (18) and forming an electrically conductive contact therewith.

14. Method according to claim 13, **characterised in that** the conductive disc (18) is cast around the connection region (17) of the at least one electrically conductive mesh layer (6).

15. Method according to claim 13 or 14, **characterised in that** the disc (18) is introduced between two halves (26a, 26b) of an electrically insulating shim (26), of which the boundary regions, after the two halves (26a, 26b) have been joined to one another, in each cross-section form an S-shaped gap (28) in which the connection region of the at least one mesh layer (6) is arranged and which in each cross-section likewise the form of an S-shape.

16. Method according to claim 13 to 15, **characterised in that** a channel (29) is drilled from the outside through the rotor blade shell (31) to an opening in the disc (18), and the connecting means (21) is guided from outside through the channel (29) and the opening and is electrically conductively connected to the lightning conductor cable (9).

17. Method according to claim 16, **characterised in that** the connecting means (21) is inserted electrically conductively into a receptor block.

18. Method according to claim 16, **characterised in that** the channel (29) is closed again after the connecting means (21) has been guided through.

19. Method according to claim 13 to 18, **characterised in that** the disc (18) and the connection region (17) are overlaminated on the rotor blade inner side.

## Patentansprüche

1. Rotorblatt mit wenigstens einem Kohlenstofffasern aufweisenden Gurt (3, 4) und wenigstens einer elektrisch leitenden Netzlage (6), die rotorblattaußenseitig der Kohlenstofffasern angeordnet ist, und einem Blitzableitsystem mit einem Blitzableitkabel (9),
**dadurch gekennzeichnet, dass** eine elektrisch leitende Verbindungseinrichtung (14) zwischen der Netzlage (6) und dem Blitzableitkabel (9) vorgesehen ist, die eine elektrisch leitende Scheibe (18) umfasst, in die ein Verbindungsbereich (17) der Netzlage (6) leitend eingebracht ist, und die ein elektrisch leitendes Verbindungsmittel (21) umfasst, das durch die Scheibe geführt (18) ist und mit dem Blitzableitkabel (9) elektrisch leitend verbunden ist, **dadurch gekennzeichnet, dass** das Verbindungsmittel als Bolzen (21) ausgebildet ist, der einen Kopf (22) aufweist, der an der Scheibe (18) anliegt und einen elektrisch leitenden Kontakt mit ihr ausbildet.

2. Rotorblatt nach Anspruch 1,
**dadurch gekennzeichnet, dass** die Netzlage (6) in einem Querschnitt seitlich über den Gurt (3, 4) hinausragt und der Verbindungsbereich (17) der Netzlage (6) seitlich neben dem Gurt (3, 4) angeordnet ist.

3. Rotorblatt nach Anspruch 1 oder 2,
**dadurch gekennzeichnet, dass** rotorblattinnenseitig der Scheibe (18) ein Konnektorblock (16) angeordnet ist, in den ein Abschnitt des Verbindungsmittels (21) eingebracht ist und der mit dem Blitzableitkabel (9) elektrisch leitend verbunden ist.

4. Rotorblatt nach Anspruch 1, 2 oder 3,
**dadurch gekennzeichnet, dass** zwei sich gegenüberliegende kohlenstofffaserhaltige Gurte (3) vorgesehen sind, die sich gegenüberliegende Verbindungseinrichtungen (14) aufweisen mit jeweils einem Verbindungsmittel (21), die in denselben Konnektorblock (16) eingebracht sind.

5. Rotorblatt nach einem der vorstehenden Ansprüche,
**dadurch gekennzeichnet, dass** die Netzlage (6) einen Tipabschnitt des Gurtes (3, 4) rotorblattaußenseitig vollflächig abdeckt.

6. Rotorblatt nach einem der vorstehenden Ansprüche,
**dadurch gekennzeichnet, dass** die Netzlage (6) im Verbindungsbereich (17) mehrlagig ausgebildet ist.

7. Rotorblatt nach Anspruch 6,
**dadurch gekennzeichnet, dass** die Netzlagen (6), die aus der Scheibe (18) herauslaufen, auf Netzlagen (6) entlang des Gurtes (3, 4) aufliegen.

8. Rotorblatt nach Anspruch 7,
**dadurch gekennzeichnet, dass** auf einer Rotorblattinnenseite des Kopfes (22) Zähne (24) angeordnet sind, die in die Scheibe (18) eindrücken.

9. Rotorblatt nach einem der vorstehenden Ansprüche,
**dadurch gekennzeichnet, dass** die Scheibe (18) in den Verbindungsbereich (17) eingelötet ist.

10. Rotorblatt nach einem der vorstehenden Ansprüche,
**dadurch gekennzeichnet, dass** die Scheibe (18) zwischen zwei Hälften (26a, 26b) einer elektrisch isolierenden Beilegscheibe (26) eingebracht ist, deren Randbereiche, wenn die beiden Hälften (26a, 26b) aufeinander gefügt sind, in jedem Querschnitt einen S-förmigen Spalt (28) ausbilden, in dem die wenigstens eine Netzlage (6) angeordnet ist, die in jedem Querschnitt die S-förmige Form annimmt.

11. Rotorblatt nach einem der vorstehenden Ansprüche,
**dadurch gekennzeichnet, dass** rotorblattaußenseitig des Verbindungsmittels (21) ein Kanal (29) in eine Rotorblattschale (31) eingebracht ist, die mit Laminat verschlossen ist.

12. Rotorblatt nach einem der vorstehenden Ansprüche,
**dadurch gekennzeichnet, dass** die Verbindungseinrichtung (14) rotorblattinnenseitig auf eine Rotorblattschaleninnenseite auflaminiert ist.

13. Verfahren zur Herstellung eines Rotorblattes mit einem Blitzableitsystem mit einem Blitzableitkabel (9), indem
zwischen wenigstens einem kohlestofffaserhaltigen Gurt (3, 4) und einer Rotorblattschale (31) wenigstens eine elektrisch leitendende Netzlage (6) angeordnet wird, die sich in einem Querschnitt seitlich neben dem Gurt erstreckt, und
eine elektrisch leitende Scheibe (18) in einen seitlich neben dem Gurt (3, 4) angeordneten Verbindungsbereich (17) in die wenigstens eine Netzlage (6) leitend eingebracht wird und
ein elektrisch leitendes Verbindungsmittel (21) durch die Scheibe (18) geführt wird und mit dem Blitzableitkabel (9) elektrisch leitend verbunden wird, **dadurch gekennzeichnet, dass** das Verbindungsmittel als Bolzen (21) ausgebildet ist, der einen Kopf (22) aufweist, der an der Scheibe (18) anliegt und einen elektrisch leitenden Kontakt mit ihr ausbildet.

14. Verfahren nach Anspruch 13,
**dadurch gekennzeichnet, dass** die leitende Scheibe (18) um den Verbindungsbereich (17) der wenigstens einen elektrisch leitenden Netzlage (6) gegossen wird.

15. Verfahren nach Anspruch 13 oder 14,
**dadurch gekennzeichnet, dass** die Scheibe (18) zwischen zwei Hälften (26a, 26b) einer elektrisch isolierenden Beilegscheibe (26) eingebracht wird, deren Randbereiche, nachdem die beiden Hälften (26a, 26b) aufeinander gefügt wurden, in jedem Querschnitt einen S-förmigen Spalt (28) ausbilden, in dem der Verbindungsbereich (17) die wenigstens eine Netzlage (6) angeordnet wird, die in jedem Querschnitt die S-förmige Form annimmt.

16. Verfahren nach Anspruch 13 bis 15,
**dadurch gekennzeichnet, dass** ein Kanal (29) von außen durch die Rotorblattschale (31) zu einer Öffnung der Scheibe (18) gebohrt wird und das Verbindungsmittel (21) von außen durch den Kanal (29) und die Öffnung hindurchgeführt wird und mit dem Blitzableitkabel (9) elektrisch leitend verbunden wird.

17. Verfahren nach Anspruch 16,
**dadurch gekennzeichnet, dass** das Verbindungsmittel (21) in einen Rezeptorblock elektrisch leitend eingefügt wird.

18. Verfahren nach Anspruch 16,
**dadurch gekennzeichnet, dass** der Kanal (29), nachdem das Verbindungsmittel (21) hindurchgeführt wurde, wieder verschlossen wird.

19. Verfahren nach Anspruch 13 bis 18,
**dadurch gekennzeichnet, dass** die Schreibe (18) und der Verbindungsbereich (17) rotorblattinnenseitig überlaminiert werden.

## Revendications

1. Pale de rotor avec au moins une coiffe (3, 4) comprenant des fibres de carbone et avec au moins une c des fibres de carbone ouche de mailles électroconductrice (6) qui est disposée sur le côté extérieur de la pale de rotor et avec un système conducteur d'éclairage qui a un câble conducteur d'éclairage (9) et un dispositif de connexion électroconducteur (14) prévu entre la couche de mailles (6) et le câble conducteur d'éclairage (9) et qui comprend un disque électroconducteur (18) dans lequel une région de connexion (17) de la couche de mailles (6) est introduite en étant conductrice et qui comprend un moyen de connexion électroconducteur (21) qui est guidé à travers le disque (18) et qui est relié de manière électroconductrice au câble conducteur d'éclairage (9),
**caractérisée en ce que** le moyen de connexion est conçu comme un boulon (21) qui a une tête (22) qui jouxte le disque (18) et qui forme un contact électroconducteur avec celle-ci.

2. Pale de rotor selon la revendication 1, **caractérisée en ce que** dans une section transversale la couche de mailles (6) fait saillie latéralement au-dessus de la coiffe (3, 4) et la région de connexion (17) de la couche de mailles (6) est disposée latéralement le long de la coiffe (3, 4).

3. Pale de rotor selon la revendication 1 ou 2, **caractérisée en ce qu'**un bloc connecteur (16) dans lequel une section du moyen de connexion (21) est introduite et qui est reliée de manière électroconductrice au câble conducteur d'éclairage (9) est avantageusement disposé sur le côté intérieur du disque (18) de la pale de rotor.

4. Pale de rotor selon la revendication 1, 2 ou 3, **caractérisée en ce que** deux coiffes opposées (3) contenant des fibres de carbone sont prévues qui ont des dispositifs de connexion opposés (14) avec dans chaque cas un moyen de connexion (21) qui est introduit dans le même bloc connecteur (16).

5. Pale de rotor selon l'une des revendications précédentes, **caractérisée en ce que** la couche de mailles (6) couvre entièrement une section de pointe de la coiffe (3, 4) sur le côté extérieur de la pale de rotor.

6. Pale de rotor selon l'une des revendications précédentes, **caractérisée en ce que** la couche de mailles (6) est conçue avec des couches multiples dans la région de connexion (17).

7. Pale de rotor selon la revendication 6, **caractérisée en ce que** les couches de mailles (6) qui sortent du disque (18) reposent sur des couches de mailles (6) le long de la coiffe (3, 4).

8. Pale de rotor selon la revendication 7, **caractérisée en ce que** des dents (24) qui pressent dans le disque (18) sont disposées sur un côté intérieur de la tête (22) de la pale de rotor.

9. Pale de rotor selon l'une des revendications précédentes, **caractérisée en ce que** le disque (18) est brasé ou soudé dans la région de connexion (17).

10. Pale de rotor selon l'une des revendications précédentes, **caractérisée en ce que** le disque (18) est introduit entre deux moitiés (26a, 26b) d'une cale isolante électriquement (26) dont les régions marginales, si les deux moitiés (26a, 26b) sont reliées l'une à l'autre, forment dans chaque section transversale un vide en forme de S (28) dans lequel la au moins une couche de mailles (6) est disposée et qui prend pareillement dans chaque section transversale la forme d'un S.

11. Pale de rotor selon l'une des revendications précédentes, **caractérisée en ce que** sur le côté extérieur du moyen de connexion (21) de la pale de rotor un canal (29) qui est fermé avec du laminé est introduit dans une coque de pale de rotor (31).

12. Pale de rotor selon l'une des revendications précédentes, **caractérisée en ce que** sur le côté intérieur de la pale de rotor le dispositif de connexion est laminé sur un côté intérieur de la coque de pale de rotor.

13. Procédé de production d'une pale de rotor avec un système conducteur d'éclairage avec un câble conducteur d'éclairage (9), cependant qu'au moins une couche de mailles électroconductrice (6) qui s'étend dans une section transversale latéralement le long d'au moins une coiffe (3, 4) est disposée entre la au moins une coiffe (3, 4) qui contient des fibres de carbone et une coque de pale de rotor (31) et un disque électroconducteur (18) est introduit de manière conductrice dans la au moins une couche de mailles (6) dans une région de connexion (17) disposée latéralement le long de la coiffe et un moyen de connexion électroconducteur (21) est guidé à travers le disque (18) et est connecté de manière électroconductrice au câble conducteur d'éclairage (9), **caractérisé en ce que** le moyen de connexion est conçu comme un boulon (21) qui a une tête (22) qui jouxte le disque (18) et qui forme un contact électroconducteur avec celle-ci.

14. Procédé selon la revendication 13, **caractérisé en ce que** le disque conducteur (18) est coulé autour de la région de connexion (17) de la au moins une couche de mailles électroconductrice (6).

15. Procédé selon la revendication 13, **caractérisé en ce que** le disque (18) est introduit entre deux moitiés (26a, 26b) d'une cale isolante électriquement (26) dont les régions marginales, après que les deux moitiés (26a, 26b) aient été reliées l'une à l'autre, forment dans chaque section transversale un vide en forme de S (28) dans lequel la région de connexion de la au moins une couche de mailles (6) est disposée et qui prend pareillement dans chaque section transversale la forme d'un S.

16. Procédé selon la revendication 13 ou 15, **caractérisé en ce qu'**un canal (29) est percé de l'extérieur à travers la coque de pale de rotor (31) vers une ouverture dans le disque (18) et le moyen de connexion (21) est guidé de l'extérieur à travers le guide (29) et l'ouverture et est relié de manière électroconductrice au câble conducteur d'éclairage (9).

17. Procédé selon la revendication 16, **caractérisé en ce que** le moyen de connexion (21) est inséré de manière électroconductrice dans un bloc récepteur.

18. Procédé selon la revendication 16, **caractérisé en ce que** le canal (29) est refermé après que le moyen de connexion (21) ait été guidé à travers.

19. Procédé selon les revendications 13 à 18, **caractérisé en ce que** le disque (18) et la région de connexion (17) sont surlaminés sur le côté intérieur de la pale de rotor.
